(19) Europäisches Patentamt
European Patent Office
Office européen des brevets

(11) Veröffentlichungsnummer: **0 220 440**
**A1**

# (12) EUROPÄISCHE PATENTANMELDUNG

(21) Anmeldenummer: **86112389.1**

(22) Anmeldetag: **08.09.86**

(51) Int. Cl.⁴: **C 08 G 18/80**, C 08 G 18/08, C 08 G 18/64, C 08 G 18/60, C 08 G 18/62, C 09 D 5/44

(30) Priorität: **25.09.85 AT 2787/85**

(43) Veröffentlichungstag der Anmeldung: **06.05.87 Patentblatt 87/19**

(84) Benannte Vertragsstaaten: **BE CH DE FR GB IT LI NL SE**

(71) Anmelder: **Vianova Kunstharz Aktiengesellschaft, A-8402 Werndorf (AT)**

(72) Erfinder: **Plum, Helmut, Dr., Nibelungenstrasse 3, D-6204 Taunusstein 4 (DE)**
Erfinder: **Hönel, Michael, Dr., Hoechst AG Werk Albert Postf. 129101, D-6202 Wiesbaden (DE)**

(74) Vertreter: **Pitter, Robert, Dr. et al, Postfach 191 Leechgasse 21, A-8011 Graz (AT)**

(54) **Verfahren zur Herstellung selbstvernetzender kationischer Lackbindemittel.**

(57) Die Erfindung betrifft ein Verfahren zur Herstellung von selbstvernetzenden kationischen Lackbindemitteln, wobei die Vernetzung durch Reaktion der Methancarbonsäuredialkylestermonoamid-Strukturen des Harzes mit freien Hydroxyl- oder Aminogruppen erfolgt.

Für die Einführung der Vernetzungsfunktionen werden Verbindungen eingesetzt, welche eine freie Isocyanatgruppe und mindestens eine Methancarbonsäuremono- und/oder -dialkylestermonoamid-Gruppe aufweisen. Solche Verbindungen werden durch Umsetzung von Di- oder Polyisocyanatverbindungen mit der entsprechenden Menge eines CH-aktiven Alkylesters erhalten. Als solche werden vorzugsweise Malonsäuredimethylester oder Malonsäurediethylester verwendet.

Die Erfindung betrifft weiter die nach dem Verfahren hergestellten Produkte sowie deren Verwendung als Bindemittel für kathodisch abscheidbare Elektrotauchlacke.

EP 0 220 440 A1

1 Verfahren zur Herstellung selbstvernetzender kationischer Lackbindemittel

Die Erfindung betrifft ein Verfahren zur Herstellung von selbstvernetzenden kationischen Lackbindemitteln, wobei die Vernetzung durch Reaktion von Methancarbonsäurealkylestermonoamid-Strukturen des Harzes mit freien Hydroxyl- oder Aminogruppen erfolgt.

Es ist bekannt (Petersen, Taube; Liebigs Ann.Chem. 562, (1949) 205), daß sich aus Isocyanaten und Malonsäuredialkylestern in Gegenwart von Natrium oder Natriumalkoholaten als Katalysatoren Verbindungen mit einer Methantricarbonsäuredialkylestermonoamid-Struktureinheit herstellen lassen, die bereits ab ca. 130°C mit Polyolen unter Vernetzung reagieren.

Diese Reaktion wurde in der Folge vielfach zur Herstellung von Härtungskomponenten für flüssige Einbrennlacke oder Einbrennlacke mit organischen Lösungsmitteln verwendet.

Produkte dieser Art werden in den DE-OSS 23 43 603, 24 36 877 oder 25 50 156 beschrieben. Die dort beschriebenen Isocyanat-Malonester-Additionsprodukte lassen sich im Prinzip auch in Zubereitungen für die kathodische Elektrotauchlackierung verwenden, wenn sie mit basischen Kunstharzen, die nach einer Teilneutralisation mit Säuren wasserverdünnbar sind, kombiniert werden. Bei niedrigen Einbrenntemperaturen von z. B. 140°C erhält man jedoch in den meisten Fällen Beschichtungen, deren Härte und Lösungsmittelbeständigkeit nicht ausreichend sind. Auch die Mitverwendung von Aminoplastharzen, wie sie in der DE-OS 27 23 117 beschrieben wird, bringt keine Vorteile; wahrscheinlich werden die zur Härtung der Aminoplastharze

erforderlichen Katalysatoren, wie Sulfonsäuren, durch die basischen Kunstharze neutralisiert und damit unwirksam.

Es wurde nun gefunden, daß man selbstvernetzende kationische Lackbindemittel erhält, welche bereits bei Einbrenntemperaturen ab 120°C Überzüge mit hervorragenden lacktechnischen Eigenschaften aufweisen, wenn man Methancarbonsäuremono- und/oder -dialkylestermonoamidstrukturen in Form von Monoisocyanatverbindungen in basische Gruppierungen aufweisende Harze einbaut. Die Produkte sind nach zumindestens teilweiser Protonierung mit Wasser verdünnbar und eignen sich als Einkomponentensystem als Bindemittel für Lacke, insbesonders für Elektrotauchlacke.

Die vorliegende Erfindung betrifft demgemäß ein Verfahren zur Herstellung von selbstvernetzenden, kationischen, nach zumindest teilweiser Protonierung mit anorganischen und/oder organischen Säuren wasserverdünnbaren Lackbindemitteln, welches dadurch gekennzeichnet ist, daß man ein basische Stickstoffgruppen und zur Umesterung oder Umamidierung befähigte Hydroxyl- und/oder Aminogruppen und isocyanatreaktive Wasserstoffatome aufweisendes Polykondensations-, Polyadditions- oder Polymerisationsharz mit einer eine freie Isocyanatgruppe und mindestens eine Methancarbonsäuremono- und/oder -dialkylestermonoamidgruppe der Formel

```
            X
            |
   -NH-CO-CH
            |
            COOR
```

wobei X -COOR, -CN oder $CH_3$-CO- und R einen Alkylrest mit 1 bis 8 C-Atomen bedeutet, aufweisenden Verbindung umsetzt.

Die Erfindung betrifft weiters die nach dem Verfahren hergestellten Produkte sowie deren Verwendung als Bindemittel für kathodisch abscheidbare Elektrotauchlacke.

Bei der durch Umesterung oder Umamidierung erfolgenden Vernetzung wird als Spaltprodukt nur der Alkohol aus dem CH-aktiven Alkylester gefunden; eine Abspaltung des CH-aktiven Alkylesters unter Freisetzung der Isocyanatgruppen und nachfolgender Vernetzung über die Ausbildung von Urethan- oder Harnstoffgruppen findet offensichtlich nicht statt.

Dieser Reaktionsmechanismus ist aus neueren Untersuchungen über Malonsäurediethylester/Cyclohexyldiisocyanat-Additionsprodukte bekannt (Wicks, Kostyk; J. Coat. Techn. 49 (1977)77).

Als Polykondensations-, Polyadditions- oder Polymerisationsharze werden kationische Harze, wie sie bereits in großer Zahl in der Literatur beschrieben sind, eingesetzt. Voraussetzung für ihre Brauchbarkeit ist (a) eine ausreichende Anzahl basischer Gruppierungen, vorzugsweise tertiärer Aminogruppen, um eine einwandfreie Verdünnbarkeit mit Wasser, gegebenenfalls in Gegenwart von Hilfslösemitteln, zu gewährleisten; (b) eine ausreichende Anzahl von isocyanatreaktiven Wasserstoffatomen und (c) eine ausreichende Anzahl verbleibender, für die Umesterung und/oder Umamidierung zur Verfügung stehender Hydroxyl- bzw. Aminogruppen.

Es sind dies beispielsweise Polymerisate aus olefinisch ungesättigten Monomeren, die als Bestandteil Ester von olefinisch ungesättigten Carbonsäuren, sowie Hydroxyalkylacrylate oder Aminoalkylacrylate enthalten. Eine weitere Gruppe sind die aus dimerisierten Fettsäuren

und Polyaminen erhältlichen Polyaminopolyamide oder die z. B. durch Umsetzung von Epoxidharzen mit primären oder sekundären Aminen zugänglichen Aminopolyetherpolyole. Für die Formulierung von kathodisch abscheidbaren ETL-Zusammensetzungen eignen sich besonders die zuletzt genannten Aminopolyetherpolyole.

Für die Einführung der Vernetzungsfunktionen werden Verbindungen eingesetzt, welche eine freie Isocyanatgruppe und mindestens eine Methancarbonsäuremono- und/oder -dialkylestermonoamid-Gruppe gemäß Anspruch aufweisen. Solche Verbindungen werden durch Umsetzung von Di- oder Polyisocyanatverbindungen mit der entsprechenden Menge eines CH-aktiven Alkylesters erhalten.

Als Isocyanatverbindungen werden vorzugsweise Diisocyanate und insbesonders solche, deren Isocyanatgruppen unterschiedliche Reaktivität aufweisen, eingesetzt. Beispiele für diese Verbindungen sind 3-Isocyanatomethyl-3,5,5-trimethylcyclohexylisocyanat (IPDI) oder 2,4-Diisocyanatotoluol.

Als CH-aktive Alkylester werden Verbindungen der allgemeinen Formel

$$X-CH_2-COOR$$

eingesetzt, wobei

X -COOR, -CN oder $CH_3$-CO-

und R einen Alkylrest mit 1 bis 8 C-Atomen bedeutet. Vorzugsweise werden Malonsäuredimethylester oder Malonsäurediethylester verwendet.

Die Reaktion zwischen dem Diisocyanat und dem CH-aktiven Alkylester wird bevorzugt in Anwesenheit von Lösemitteln, die keine aktiven Wasserstoffatome enthalten, wie z.B. Ethylacetat, Butylacetat, Toluol, Methylethylketon,

Ethylenglykoldimethylether etc., durchgeführt. Sie kann jedoch auch ohne Lösemittel durchgeführt werden. Vorzugsweise erfolgt die Reaktion unter Stickstoff und unter Ausschluß von Feuchtigkeit. Als Katalysator dient Natrium oder, bevorzugt, Natriumphenolat, welches in einer Menge von 0,1 - 0,5 Gew.-%, bezogen auf das Gesamtgewicht der Reaktionskomponenten, eingesetzt wird.

Diisocyanat und CH-aktiver Alkylester werden in äquimolaren Mengen eingesetzt. Die Reaktion wird so durchgeführt, daß man das Isocyanat, gegebenenfalls zusammen mit dem Lösemittel, im Reaktionsgefäß vorlegt und den CH-aktiven Alkylester sowie den Katalysator, bevorzugt bei Raumtemperatur, in 0,5 bis 10 Stunden kontinuierlich zugibt. Zur Vermeidung von Nebenreaktionen wird das so erhaltene Zwischenprodukt unmittelbar mit dem Harz bei 40 bis 60°C weiterreagiert, bis der Isocyanatgehalt auf praktisch 0 gesunken ist.

Die Anzahl der zur Vernetzung zur Verfügung stehenden Estergruppen aus dem eingesetzten Zwischenprodukt soll etwa zwischen 0,5 bis 2 pro verbleibender Hydroxylgruppe oder primärer bzw. sekundärer Aminogruppe im Endprodukt liegen.

Die Formulierung der Lacke sowie deren Verarbeitung nach den üblichen Auftragsverfahren, insbesonders dem ETL-Verfahren, sind dem Fachmann bekannt und in der Literatur beschrieben.

Zur Beschleunigung der Umesterung bzw. Umamidierung können die bekannten Katalysatoren, wie Metallsalze organischer Säuren, z. B. Zink-, Blei-, Eisen- Kupfer-, Chrom-, Cobalt-acetat, -octoat oder -naphthenat zugesetzt werden.

Die nachstehenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

Beispiel 1:

(a) Herstellung des basische Stickstoff- und Hydroxylgruppen aufweisenden Polymeren.

In einem geeigneten Reaktionsgefäß werden 1627 g (3,43 Val) eines Epoxidharzes auf Basis von Bisphenol A mit einem Epoxidäquivalentgewicht von ca 475 mit einem carboxylfunktionellen Polyester (1) in 85%iger Lösung in Diethylenglykoldimethylether (DGME) bei 110°C bis zu einer Säurezahl von weniger als 0,5 mg KOH/g umgesetzt. Nach Verdünnen des Ansatzes mit dem gleichen Lösemittel auf einen Festkörpergehalt von 70 % erfolgt bei 60°C innerhalb von 2 Stunden die Zugabe einer Mischung aus 94,5 g (0,9 Val) Diethanolamin, 67,5 g (0,9 Val) N-Methylethanolamin, 78 g (1,2 Val) N,N-Diethylaminopropylamin und 240 g DGME. Anschließend wird die Reaktion bei 70 bis 90°C bis zum Erreichen der theoretisch errechneten Epoxidzahl weitergeführt. Nach Zugabe von 233 g Polypropylenglykoldiglycidylether (Molgewicht ca 400) wird bei 120°C bis zur vollständigen Umsetzung aller Glycidylgruppen reagiert. Der Festkörpergehalt des Reaktionsproduktes wird mit DGME auf 70 % eingestellt.

(1) Der carboxylfunktionelle Polyester wird durch Umsetzung von 3 Mol Trimethylolpropan, 2 Mol Adipinsäure, 1 Mol Isononansäure und 1 Mol Tetrahydrophthalsäureanhydrid hergestellt. Er weist eine Säurezahl von 65 mg KOH/g und damit ein Carboxyläquivalentgewicht von 942 g auf.

(b) Herstellung der Monoisocyanatverbindung

In einem weiteren Reaktionsgefäß wird zu einer ca 56%igen Lösung von 1 Mol Isophorondiisocyanat in DGME 1 Mol Malonsäurediethylester und 1 Gew.-% Natriumphenolat als Katalysator bei 30°C langsam zugegeben. Anschließend wird bei 35 bis 38°C die Reaktion bis zum theoretischen NCO-Wert der Monoisocyanatverbindung geführt.

(c) Herstellung des Bindemittels

Eine 420 g Festharz entsprechende Menge der Polymerlösung (a) werden mit 105 g (Feststoff) der Monoisocyanatverbindung (b) bei 50 bis 55°C bis zu einem NCO-Wert von praktisch 0 reagiert. Das Reaktionsprodukt wird mit 12,6 g Essigsäure (100%) neutralisiert und mit deionisiertem Wasser auf einen Festkörpergehalt von 15 % verdünnt. Kathodisch abgeschiedene Filme zeigen nach Härtung bei 130°C (20 Minuten) eine Methylethylketonbeständigkeit von mehr als 100 Doppelhüben.

<u>Beispiel 2:</u>

In diesem Beispiel wird ein Polyamidoamin als Polymeres eingesetzt.

In einem geeigneten Reaktionsgefäß werden equimolare Mengen eines isomerisierten Sojaölfettsäuremethylesters (enthaltend ca 56 Gew.% konjugiert ungesättigte Anteile) und Styrol in bekannter Weise kationisch polymerisiert. Anschließend werden bei 280°C unter Vakuum die flüchtigen Anteile aus dem Ansatz abdestilliert (Ausbeute ca 1000 g = ca 65%). Das so erhaltene, schwach gelbliche ölige Reaktionsprodukt wird mit 237 g Diethylentriamin und 73 g N-Methyldipropylentriamin zur Reaktion gebracht und das dabei entstehende Methanol abdestilliert. Das erhaltene Polyamidoamin weist eine Säurezahl von 3 mg KOH/g und eine Aminzahl von ca 250 mg KOH/g auf.

420 g dieses Polyamidoaminharzes werden mit 217 g der gemäß Beispiel (1b) hergestellten Monoisocyanatverbindung (Lösung) bei 20 bis 60°C bis zu einem NCO-Wert von 0 umgesetzt. Das Reaktionsprodukt wird mit 20,5 g Essigsäure (100%) versetzt und mit deionisiertem Wasser auf einen Festkörpergehalt von 15% verdünnt.

Aus dieser Lösung kathodisch abgeschiedene Filme zeigen nach Härtung bei 130°C (Objekttemperatur, 20 Minuten) eine Methylethylketonbeständigkeit von mehr als 100 Doppelhüben.

Beispiel 3:

Verwendung eines basische Stickstoff- und Hydroxylgruppen aufweisenden Copolymeren.

In einem geeigneten Reaktionsgefäß wird bei 140°C zu 230 g DGME innerhalb von 7 Stunden eine Mischung aus 135 g eines Methacrylsäure-4-Hydroxymethyl-1,3-dioxalan--2-on-esters, 60 g Methylmethacrylat, 130 g 2-Ethylhexylacrylat, 13,0 g Di-tert.-butylperoxid und 3,3 g Dodecylmercaptan gleichmäßig zugegeben. Anschließend hält man das Reaktionsgemisch noch 2 Stunden bei 140°C. Nach Kühlen auf 80°C werden 74 g N,N-Dimethylaminopropylamin zugesetzt und bei 80°C solange reagiert bis der theoretisch berechnete Amingehalt erreicht ist. Dann wird der Festkörpergehalt des Ansatzes mit DGME auf 60% eingestellt.

700 g der Copolymerlösung werden mit 197 g der gemäß Beispiel (1b) hergestellten Isocyanatverbindung bei 50°C bis zu einem NCO-Wert von praktisch 0 reagiert.

Nach Neutralisation mit 16,6 g Essigsäure (100%) wird der Ansatz mit deionisiertem Wasser auf einen Festkörpergehalt von 15% verdünnt.

Kathodisch abgeschiedene Filme zeigen nach der Härtung (130°C/20 Minuten Objekttemperatur) eine Methylethylketonbeständigkeit von mehr als 100 Doppelhüben.

Patentansprüche

1. Verfahren zur Herstellung von selbstvernetzenden, kationischen, nach zumindest teilweiser Protonierung mit anorganischen und/oder organischen Säuren wasserverdünnbaren Lackbindemitteln, dadurch gekennzeichnet, daß man ein basische Stickstoffgruppen und zur Umesterung oder Umamidierung befähigte Hydroxyl- und/oder Aminogruppen und isocyanatreaktive Wasserstoffatome aufweisendes Polykondensations-, Polyadditions- oder Polymerisationsharz mit einer eine freie Isocyanatgruppe und mindestens eine Methancarbonsäuremono- und/oder -dialkylestermonoamidgruppe der Formel

$$-NH-CO-\underset{COOR}{\overset{X}{CH}}$$

wobei X - COOR, -CN oder $CH_3$-CO- und R einen Alkylrest mit 1 bis 8 C-Atomen bedeutet, aufweisenden Verbindung umsetzt.

2. Verfahren nach Anspruch 1, dadurch gekennzeichnet, daß man als mindestens eine Methancarbonsäuremonoamid- und/oder Methancarbosäuredialkylestermonoamidgruppe und eine freie Isocyanatgruppe aufweisende Verbindungen Umsetzungsprodukte von Di- oder Polyisocyanatverbindungen mit der entsprechenden Menge eines CH-aktiven Alkylesters der allgemeinen Formel

$$X-CH_2-COOR,$$

wobei X -COOR, -CN oder $CH_3$-CO und R ein Alkylrest mit 1 bis 8 C-Atomen ist, einsetzt.

3\. Verfahren nach den Ansprüchen 1 und 2, dadurch gekennzeichnet, daß man als CH-aktiven Alkylester Malonsäuredimethylester und/oder Malonsäurediethylester einsetzt.

4\. Verfahren nach den Ansprüchen 1 bis 3, dadurch gekennzeichnet, daß man die Mengenverhältnisse für die Umsetzung des basische Stickstoffgruppen und Hydroxylgruppen aufweisenden Polykondensations-, Polyadditions- oder Polymerisationsharzes mit der Monoisocyanatverbindung so wählt, daß im Endprodukt ca 0,5 bis 2 freie Hydroxylgruppen für jede vernetzungsfähige Estergruppe vorliegen.

5\. Selbstvernetzende, kationische, nach zumindest teilweiser Protonierung mit anorganischen und/oder organischen Säuren wasserverdünnbare Lackbindemittel dadurch gekennzeichnet, daß ein basische Stickstoffgruppen und zur Umesterung oder Umamidierung befähigte Hydroxyl- und/oder Aminogruppen und isocyanatreaktive Wasserstoffatome aufweisendes Polykondensations-, Polyadditions- oder Polymerisationsharz mit einer eine freie Isocyanatgruppe und mindestens eine Methancarbonsäuremono- und/oder dialkylestermonoamidgruppe der Formel

$$-NH-CO-\underset{COOR}{\overset{X}{CH}}$$

wobei X -COOR, -CN oder $CH_3$-CO- und R einen Alkylrest mit 1 bis 8 C-Atomen bedeutet, aufweisenden Verbindung umgesetzt wurde.

6. Verwendung der nach dem Verfahren nach den Ansprüchen 1 bis 5 hergestellten Lackbindemittel für kathodisch abscheidbare Elektrotauchlacke.

Europäisches Patentamt

# EUROPÄISCHER RECHERCHENBERICHT

0220440

Nummer der Anmeldung

EP 86 11 2389

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 449 736 (MITSUBISHI CHEMICAL IND.) * Patentansprüche 1,4,7; Seite 4, Zeilen 5-17; Seite 8, Zeilen 36-38; Seite 8, Zeile 39 - Seite 9, Zeile 3; Seite 9, Zeile 37 - Seite 10, Zeile 1 * --- | 1-6 | C 08 G 18/80<br>C 08 G 18/08<br>C 08 G 18/64<br>C 08 G 18/60<br>C 08 G 18/62<br>C 09 D 5/44 |
| X | FR-A-2 285 434 (KANSAI PAINT CO.) * Patentansprüche 1,9; Seite 7, Zeilen 1-14; Seite 8, Zeilen 10-11; Seite 10, Zeilen 26-39 * --- | 1-6 | |
| X | GB-A-2 041 381 (SUMITOMO CHEMICAL CO.) * Patentansprüche 9-16,19; Seite 4, Zeilen 17,28-33; Seite 5, Zeile 45 - Seite 6, Zeile 6 * --- | 1,2,4-6 | RECHERCHIERTE SACHGEBIETE (Int. Cl.4) |
| X | DE-A-2 911 243 (B.A.S.F) * Patentansprüche 1,3; Seite 16, Zeile 19 - Seite 17, Zeile 1 * --- | 1-6 | C 08 G<br>C 09 D |
| X | DE-A-2 632 708 (KAO SOAP CO.) * Patentanspruch 1; Seite 12, Absatz 1 - Seite 14, Absatz 1; Seite 14, letzter Absatz - Seite 15, Absatz 2 * --- -/- | 1-5 | |

Der vorliegende Recherchenbericht wurde für alle Patentansprüche erstellt.

| Recherchenort | Abschlußdatum der Recherche | Prüfer |
|---|---|---|
| DEN HAAG | 28-01-1987 | VAN PUYMBROECK M.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

Europäisches Patentamt

**EUROPÄISCHER RECHERCHENBERICHT**

0220440
Nummer der Anmeldung

EP 86 11 2389

Seite 2

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| A | FR-A-2 292 724 (BAYER) * Patentansprüche 1,4; Seite 4, Zeilen 24-29; Seite 5, Zeilen 25-32 * | 1,2,5 | |
| | ----- | | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
|---|---|---|
| DEN HAAG | 28-01-1987 | VAN PUYMBROECK M.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument